# EUROPÄISCHE PATENTSCHRIFT

(11) **EP 2 565 422 B1**
(45) Veröffentlichungstag und Bekanntmachung des Hinweises auf die Patenterteilung: **30.10.2019**
(21) Anmeldenummer: 12181558.3
(22) Anmeldetag: 23.08.2012
(51) Int. Cl.: F02C 7/32, F02C 7/36, F16H 35/00

(54) **Hilfsgerätegetriebeeinrichtung für ein Triebwerk**
Auxiliary geared drive for a jet engine
Ensemble de transmission à entraînement auxiliaire pour un turboréacteur

(30) Priorität: 02.09.2011 DE 102011112255
(43) Veröffentlichungstag der Anmeldung: 06.03.2013
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE); Venter, Gideon, 14165 Berlin (DE)
(74) Vertreter: Kronthaler, Wolfgang N.K.

(56) Entgegenhaltungen:
- FR-A1- 2 946 091
- US-A- 5 694 765
- US-A- 6 058 791
- US-A1- 2006 137 355
- US-A1- 2008 110 151
- US-A1- 2010 156 113

## Beschreibung

Die Erfindung betrifft eine Hilfsgerätegetriebeeinrichtung für ein Triebwerk gemäß der im Oberbegriff des Patentanspruches 1 näher definierten Art.

Üblicherweise sind für den Einsatz in Triebwerken ausgebildete Hilfsgerätegetriebeeinrichtungen vorgesehen, über die verschiedene Hilfsaggregate, wie beispielsweise eine Spritpumpe, ein Generator und dergleichen, ausgehend von einer Triebwerkswelle mit einem jeweils erforderlichen Drehzahl- und Drehmomentniveau antreibbar sind. Hierzu sind die Hilfsaggregate jeweils mit einer Hilfsgerätegetriebewelle koppelbar. Die Hilfsgerätegetriebewellen sind im Wesentlichen achsparallel zueinander an den zur Verfügung stehenden Bauraum im Triebwerk angepasst, im Wesentlichen in Umfangsrichtung des Triebwerkes verteilt nebeneinander positioniert und werden über Stirnradstufen von einer mit der Triebwerkswelle wirkverbundenen Antriebswelle der Hilfsgerätegetriebeeinrichtung angetrieben.

Der zu den Hilfsaggregaten zählende und als unabhängige Stromquelle für eine Stromversorgung eines Flugzeugs vorgesehene Generator wird über eine parallel zur Antriebswelle verlaufende Hilfsgerätegetriebewelle vorzugsweise mit einer Drehzahl im Geschwindigkeitsbereich von etwa 7.000 bis 20.000 Umdrehungen pro Minute angetrieben. Weiterhin sind bekannte Hilfsgerätegetriebeeinrichtungen neben dem beschriebenen Generator auch mit kleiner ausgebildeten Generatoren, so genannten Permanent Magnet Alternators (PMAs) koppelbar, welche zur Stromversorgung einer Triebwerksregelung vorgesehen sind.

Die Generatoren sind jeweils in vorbeschriebenem Umfang mit einer eigens für den jeweiligen Generator vorgesehenen Hilfsgerätegetriebewelle der Hilfsgerätegetriebeeinrichtung verbunden und beispielsweise mittels einer Bolzenverbindung an ein Gehäuse der Hilfsgerätegetriebeeinrichtung montiert, so dass der Generator zu Reparatur- bzw. Wartungsaufgaben einfach und schnell von der Hilfsgerätegetriebewelle und dem Gehäuse demontierbar oder mit diesen verbindbar ist.

Die vorbeschriebene Anordnung des Generators an der Hilfsgerätegetriebeeinrichtung sowie der Antrieb des Generators ausgehend von der Triebwerkswelle über die Antriebswelle und die jeweils zugeordnete Hilfsgerätegetriebewelle führt dazu, dass die Hilfsgerätegetriebeeinrichtung einen unerwünscht großen Bauraum benötigt und durch ein hohes Gesamtgewicht gekennzeichnet ist.

Aus der FR 2 946 091 A1 ist ein Triebwerk einer Gasturbine mit einer Hilfsgerätegetriebeeinrichtung bekannt, welche im Bereich eines Zwischengehäuses des Triebwerks zwischen einem Hauptstromkanal und einem Nebenstromkanal angeordnet ist. Mit einer Triebwerkswelle wirkt eine Radialwelle zusammen, welche mehrere Wellen antreibt. Eine dieser Wellen wirkt über ein Antriebskegelrad mit einem Zahnrad einer weiteren Welle zusammen. Auf der weiteren Welle ist ein Generator angeordnet.

Ein Triebwerk mit einer Niederdruckwelle ist aus der US 2006/0137355 A1 bekannt, wobei die Niederdruckwelle mit weiteren Wellen zusammenwirkt. Auf einer der weiteren Wellen ist dabei ein Generator angeordnet.

Aus der US 2008/0110151 A1 ist eine Gasturbine bekannt, bei der ein Generator mit einer ersten Triebwerkswelle zusammenwirkt.

Der vorliegenden Erfindung liegt daher die Aufgabe zugrunde, eine Hilfsgerätegetriebeeinrichtung für ein Triebwerk zu schaffen, die einen geringen Bauraum und ein geringes Gewicht aufweist und auf einfache Weise mit einem Hilfsaggregat lösbar verbindbar ist.

Erfindungsgemäß wird diese Aufgabe mit einer Hilfsgerätegetriebeeinrichtung mit den Merkmalen des Patentanspruches 1 gelöst.

Bei einer erfindungsgemäß ausgebildeten Hilfsgerätegetriebeeinrichtung eines Triebwerks mit einer mit einer Hauptwelle des Triebwerks wirkverbindbaren Antriebswelle und mehreren hiervon angetriebenen Hilfsgerätegetriebewellen, welche jeweils mit einem Hilfsaggregat koppelbar sind und im Wesentlichen in Umfangsrichtung des Triebwerks verteilt nebeneinander positioniert sind, ist erfindungsgemäß wenigstens ein Hilfsaggregat auf einer Verlängerungswelle der Antriebswelle lösbar anordenbar, wobei die Verlängerungswelle koaxial zu der Antriebswelle anordenbar und lösbar mit dieser in Wirkverbindung bringbar ist.

Die erfindungsgemäße Hilfsgerätegetriebeeinrichtung hat den Vorteil, dass zur Anordnung des wenigstens einen insbesondere als Generator ausgebildeten Hilfsaggregats an der Hilfsgerätegetriebeeinrichtung keine separate von der Antriebswelle antreibbare Hilfsgerätegetriebewelle vorgesehen werden muss, auf welcher das wenigstens eine Hilfsaggregat bei bekannten Hilfsgerätegetriebeeinrichtungen angeordnet ist. Durch den Entfall einer Hilfsgerätegetriebewelle kann die Hilfsgerätegetriebeeinrichtung in Umfangsrichtung des Triebwerks verkürzt ausgebildet und eine Anzahl von Zahnrädern zum Betreiben der Hilfsgerätegetriebeeinrichtung reduziert werden. Hierdurch wird Bauraum und Gewicht eingespart und die erfindungsgemäße Lösung ist kostengünstig umsetzbar. Durch die Reduzierung der Länge und der Anzahl der Komponenten der Hilfsgerätegetriebeeinrichtung in Umfangsrichtung des Triebwerks ist wiederum eine Komplexität von Öl- und Luftleitungen zur Versorgung der Hilfsaggregate der gegenüber bekannten Hilfsgerätegetriebeeinrichtungen verkürzten Hilfsgerätegetriebeeinrichtung vermindert.

Das wenigstens eine Hilfsaggregat ist bei der erfindungsgemäßen Lösung weiterhin auf einfache Weise von der Hilfsgerätegetriebeeinrichtung lösbar, um beispielsweise in einem Schadensfall oder zu Wartungszwecken ausgetauscht oder repariert zu werden. Das wenigstens eine Hilfsaggregat kann durch ein Lösen der Verlängerungswelle von der Antriebswelle und ein Lösen des Hilfsaggregats von der Verlängerungswelle in einer vertikal zu der Verlängerungswelle verlaufenden Richtung auf einfache Weise von der Hilfsgerätegetriebeeinrichtung entfernt werden.

Neben der Ausbildung als Generator kann das wenigstens eine Hilfsaggregat beispielsweise als Brennstoffpumpe, Hydraulikpumpe, Entlüfter, pneumatischer Starter oder dergleichen ausgebildet sein.

Bei einer konstruktiv einfachen Ausgestaltung der erfindungsgemäßen Hilfsgerätegetriebeeinrichtung kann das wenigstens eine Hilfsaggregat von der Hilfsgerätegetriebeeinrichtung gelöst und wieder an ihr festgelegt werden, indem die Verlängerungswelle über eine translatorische Relativbewegung zur Antriebswelle von der Antriebswelle und das wenigstens eine Hilfsaggregat über eine translatorische Relativbewegung zur Verlängerungswelle von der Verlängerungswelle lösbar ist.

Besonders einfach und schnell ist das wenigstens eine Hilfsaggregat von der Hilfsgerätegetriebeeinrichtung lösbar bzw. an der Hilfsgerätegetriebeeinrichtung anordenbar, wenn das wenigstens eine Hilfsaggregat derart an der Hilfsgerätegetriebeeinrichtung gelagert ist, dass eine Wirkverbindung zwischen dem wenigstens einen Hilfsaggregat und der Verlängerungswelle durch eine Bewegung der Verlängerungswelle gegenüber der Antriebswelle in einer Richtung aufhebbar ist. Wenn das wenigstens eine Hilfsaggregat ausreichend weit gegenüber der Antriebswelle und das Hilfsaggregat hierbei aus einem Eingriff mit der Verlängerungswelle bewegt wird, kann das Hilfsaggregat auf einfache Weise von der Verlängerungswelle gelöst und vertikal zur Verlängerungswelle entfernt werden.

Um eine Lösbarkeit sowohl der Verlängerungswelle von der Antriebswelle als auch des Hilfsaggregats von der Verlängerungswelle auf konstruktiv einfache Weise umzusetzen, kann die Verlängerungswelle einen ersten Bereich, einen zweiten Bereich und insbesondere einen dritten Bereich aufweisen, wobei der erste Bereich zum Zusammenwirken mit der Antriebswelle, der zweite Bereich zum Zusammenwirken mit dem wenigstens einen Hilfsaggregat und der dritte Bereich insbesondere über ein Zahnrad einer Zahnradstufe zum Zusammenwirken mit wenigstens einer weiteren Hilfsgerätegetriebewelle ausgebildet ist.

Bei einer einfachen Ausführung der Erfindung kann die Verlängerungswelle stufenförmig mit unterschiedlichen Durchmesserbereichen ausgebildet sein. Insbesondere sämtliche Stufen weisen dabei eine sich voneinander unterscheidende radiale Erstreckung auf.

Der Durchmesser eines ersten Durchmesserbereiches der Verlängerungswelle ist bei einer vorteilhaften Ausführung der Erfindung kleiner als der Durchmesser eines zweiten Durchmesserbereiches der Verlängerungswelle und der Durchmesser des zweiten Durchmesserbereiches der Verlängerungswelle weist insbesondere einen kleineren Durchmesser als ein dritter Durchmesserbereich auf. Hierdurch kann das wenigstens eine Hilfsaggregat in Richtung des ersten Durchmesserbereiches der Verlängerungswelle von der Verlängerungswelle gelöst werden. Über den dritten Durchmesserbereich der Verlängerungswelle können weitere zusätzliche Hilfsaggregate mit der Verlängerungswelle zusammenwirken.

Um eine Anordnung der Verlängerungswelle an der Antriebswelle und des wenigstens einen Hilfsaggregats und insbesondere des Zahnrads der Zahnradstufe auf der Verlängerungswelle in einfacher Ausführung zu ermöglichen, wirken die Durchmesserbereiche der Verlängerungswelle insbesondere über eine Keilverzahnung mit der Antriebswelle, dem wenigstens einen Hilfsaggregat und insbesondere einem Zahnrad der Zahnradstufe zusammen. Die Keilverzahnung erlaubt eine translatorische Bewegung in axialer Richtung und unterbindet eine rotatorische Bewegung der jeweiligen Bauteile gegeneinander. Prinzipiell sind weitere Verbindungsarten einsetzbar, welche eine translatorische Bewegung der jeweiligen Bauteile zueinander erlauben und insbesondere eine rotatorische Relativbewegung unterbinden.

Die Wellen und ein Getriebe der Hilfsgerätegetriebeeinrichtung können bei einer vorteilhaften Ausführung der Erfindung sehr klein dimensioniert werden, wenn das wenigstens eine Hilfsaggregat vorzugsweise als Generator ausgebildet und im Kraftfluss der Hilfsgerätegetriebeeinrichtung weiteren Hilfsaggregaten vorgeschaltet ist. Da der Generator der Hauptverbraucher der Hilfsgerätegetriebeeinrichtung sein kann und dementsprechend eine große mechanische Leistung benötigt, muss bei der vorteilhaften Anordnung des Generators die für den Generator benötigte Hauptlast nicht durch die Hilfsgerätegetriebewellen geleitet werden, so dass die Hilfsgerätegetriebewellen und das Getriebe der Hilfsgerätegetriebeeinrichtung sehr klein dimensioniert werden können. Hierdurch können vorteilhafterweise Gewicht und Bauraum eingespart werden.

Bei einer vorteilhaften Ausführung der Erfindung ist vorgesehen, dass ein Gehäuse des Hilfsaggregats zur Anbindung an ein im Einbauzustand des Hilfsaggregats in axialer Richtung der Verlängerungswelle angrenzendes Gehäuse, insbesondere ein Gehäuse der Hilfsgerätegetriebeeinrichtung und/oder ein Zwischengehäuse, ausgebildet ist, wobei das Gehäuse eine entsprechende Steifigkeit aufweist, um im Betrieb der Hilfsgerätegetriebeeinrichtung auf das Gehäuse wirkenden Belastungen insbesondere in axialer und radialer Richtung standhalten zu können.

Um das Gehäuse des Hilfsaggregats auf einfache Weise kraftschlüssig in axialer Richtung der Verlängerungswelle an das angrenzende Gehäuse anbinden zu können, kann das Gehäuse des Hilfsaggregats mit wenigstens einer Befestigungseinrichtung, insbesondere einer V-Band-Schelle oder einer Schraubverbindung, mit dem angrenzenden Gehäuse wirkverbunden sein. Hierdurch kann das Gehäuse des Hilfsaggregats bei einer Anordnung zwischen einem Gehäuse der Hilfsgetriebegeräteeinrichtung und einem Zwischengehäuse auf einfache Weise eine auf die Hilfsgerätegetriebeeinrichtung wirkende Kraft von dem Gehäuse der Hilfsgerätegetriebeeinrichtung in Richtung des Zwischengehäuses weiterleiten. Um den im Betrieb des Triebwerks auf das Gehäuse wirkenden Kräften standhalten zu können, weist das Gehäuse des Hilfsaggregats einen ausreichend großen Biegewiderstand auf. Eine Sicherung entgegen eines Verdrehens des Gehäuses des Hilfsaggregats gegenüber dem jeweiligen angrenzenden Gehäuse kann beispielsweise durch einen Pin, einen Bolzen oder dergleichen erzielt werden, welcher im Bereich der V-Band-Schelle in axialer Richtung in Flanschen der jeweiligen Gehäuse angeordnet sein kann.

Zur Festlegung der Verlängerungswelle in axialer Richtung gegenüber der Antriebswelle kann eine Sicherungseinrichtung vorgesehen sein, mittels welcher die Verlängerungswelle insbesondere in einem Betriebszustand der Hilfsgerätegetriebeeinrichtung entgegen einer Relativbewegung gegenüber der Antriebswelle in axialer Richtung festlegbar ist.

Bei einer vorteilhaften Ausführung der Erfindung weist die Verlängerungswelle insbesondere in den Durchmesserbereichen wenigstens eine Ausnehmung auf, über welche ein Verbindungsbereich der Verlängerungswelle mit der Antriebswelle und/oder mit dem wenigstens einen Hilfsaggregat und/oder mit dem Zahnrad der Zahnradstufe mit einem Schmier- und/oder Kühlmittel versorgbar ist bzw. sind. Das Schmier- bzw. Kühlmittel kann in der als Hohlwelle ausgebildeten Verlängerungswelle vorgesehen und im Betriebszustand der Hilfsgerätegetriebeeinrichtung durch eine Zentrifugalkraft durch die wenigstens eine Ausnehmung dem jeweiligen Verbindungsbereich zuführbar sein.

Insbesondere vorteilhaft ist es, wenn die Verlängerungswelle insgesamt in einem Bereich eines Zwischengehäuses des Triebwerks, d. h. in radialer Richtung zwischen einem Nebenstromkanal und einem Triebwerkskern, anordenbar ist. Alternativ hierzu kann die Verlängerungswelle außerhalb eines Nebenstromkanals, beispielsweise in einem Bereich eines Gehäuses, angeordnet sein.

Das wenigstens eine Hilfsaggregat kann zur Stromversorgung einer Triebwerksregelung als Generator und insbesondere als PMA ausgebildet sein. Alternativ hierzu kann der Generator auch zur Stromversorgung eines gesamten Triebwerks ausgebildet sein, wobei der Generator zur Abführung von Wärmeenergie hierzu insbesondere ein separates Kühlsystem aufweist.

Um beispielsweise auf einen Tank und eine Pumpe des Kühlsystems des wenigstens einen Hilfsaggregats verzichten zu können, kann ein Kühlsystem des wenigstens einen Hilfsaggregats an eine Kühleinrichtung der Hilfsgerätegetriebeeinrichtung bzw. des Triebwerks koppelbar sein.

Bei einer besonders vorteilhaften Ausführung der erfindungsgemäßen Hilfsgerätegetriebeeinrichtung ist ein wenigstens einen Stator aufweisender Statorbereich des vorzugsweise als Generator ausgeführten Hilfsaggregates gegenüber einem wenigstens einen Rotor aufweisenden Rotorbereich des Generators getrennt. Hierdurch kann auf konstruktiv einfache Art und Weise eine verbesserte und besonders effektive Kühlung des Generators sichergestellt werden, da das Kühlmedium nahe an den Stator gelangen kann, in dessen Bereich ein Großteil der Wärme in einem Betriebszustand des Generators entsteht.

Eine vollständige Abdichtung des Statorbereichs gegenüber dem Rotorbereich ist mit einfachen Mitteln möglich. Durch die Separierung des Rotorbereichs von dem Statorbereich bzw. die Kapselung des Statorbereichs wird außerdem sichergestellt, dass das Kühlmedium nicht in Kontakt mit dem elektrische Komponenten aufweisenden Statorbereich tritt. Da der Rotor im Betriebszustand des Generators von dem Kühlmedium umspült wird, kann er bei der Wahl eines entsprechenden Kühlmediums durch das Kühlmedium zusätzlich vor Korrosion geschützt werden.

Bei einer konstruktiv einfachen Weiterbildung der Erfindung ist zur Trennung des Statorbereichs von dem Rotorbereich ein zwischen Stator und Rotor verlaufendes Trennelement vorgesehen, durch welches der Stator insbesondere zusammen mit einem Gehäuse des Generators gekapselt wird. Da das Trennelement kein Strukturbauteil darstellt und dementsprechend keine tragende Funktion zu erfüllen hat, kann es sehr dünn ausgebildet werden. Ein Abstand zwischen dem Stator und dem Rotor, welcher für die Effektivität des Generators eine entscheidende Rolle spielt, kann somit sehr klein gehalten werden. Eventuelle Verluste durch den durch das Trennelement geringfügig vergrößerten Abstand zwischen dem Rotor und dem Stator des Generators können gegebenenfalls durch eine geringe Erhöhung einer Magnetfeldstärke im Vergleich zu einem herkömmlichen Generator ohne Trennelement auf einfache Weise ausgeglichen werden.

Sowohl die in den Patentansprüchen angegebenen Merkmale als auch die in den nachfolgenden Ausführungsbeispielen der erfindungsgemäßen Hilfsgerätegetriebeeinrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Hilfsgerätegetriebeeinrichtung ergeben sich aus den Patentansprüchen und den nachfolgend unter Bezugnahme auf die Zeichnung prinzipmäßig beschriebenen Ausführungsbeispielen.

Es zeigt:
- Fig. 1: eine stark schematisierte Längsschnittansicht eines Strahltriebwerkes mit einer im Wesentlichen in radialer Richtung im Bereich eines Zwi-schengehäuses des Strahltriebwerks angeordneten Hilfsgerätegetriebeeinrichtung, welche einen auf einer Verlängerungswelle angeordneten Generator aufweist;
- Fig. 2: eine vereinfachte dreidimensionale Darstellung der Hilfsgerätegetriebeeinrichtung der Fig. 1 mit einem auf der Verlängerungswelle angeordneten Generator;
- Fig. 3: eine vereinfachte Schnittansicht der Hilfsgerätegetriebeeinrichtung, wobei eine Anbindung der Verlängerungswelle an eine Antriebswelle und eine Anordnung des Generators und eines zum Antrieb eines Hilfsaggregats vorgesehenen Zahnrades an der Verlängerungswelle ersichtlich ist; und
- Fig. 4: eine vereinfachte Darstellung eines Bereiches des auf der Verlängerungswelle angeordneten Generators, wobei ein einen Statorbereich von einem Rotorbereich des Generators trennendes Trennelement ersichtlich ist.

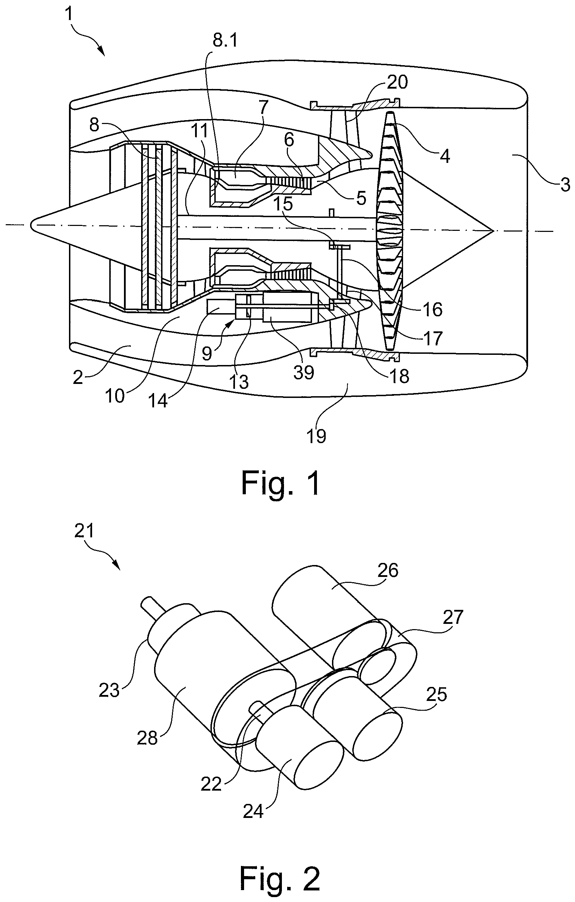

Die Fig. 1 zeigt ein Strahltriebwerk 1, welches einen Nebenstromkanal 2 und einen Einlaufbereich 3 aufweist, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7, einer zum Antrieb des Bläsers 4 vorgesehenen Niederdruckturbine 8 und einer zum Antrieb der Verdichtereinrichtung 6 vorgesehenen Hochdruckturbine 8.1 ausgeführt ist.

Die Fig. 1 zeigt weiterhin eine schematisch dargestellte Hilfsgerätegetriebeeinrichtung 9, welche im Wesentlichen im Bereich eines Zwischengehäuses 10 des Strahltriebwerks 1 angeordnet ist, und welche mit einem als Generator 39 ausgebildeten Hilfsaggregat koppelbar ist. Das Zwischengehäuse 10 befindet sich in radialer Richtung des Strahltriebwerks gesehen in einem Bereich zwischen dem Triebwerkskern 5 und dem Nebenstromkanal 2.

Zum Antrieb der Hilfsgerätegetriebeeinrichtung 9 ist eine mit einer Triebwerkswelle 11 zusammenwirkende Antriebswelle 12 vorgesehen, welche im Wesentlichen parallel zu der Triebwerkswelle 11 angeordnet ist und mit der Triebwerkswelle 11 vorliegend über eine Hilfswelle 16 zusammenwirkt. Die Hilfswelle 16 ist über eine Kegelradverzahnung 15 an die Triebwerkswelle 11 angebunden, wobei sie mit einer Hochdruckwelle zusammenwirkt, welche im Betriebszustand des Strahltriebwerks 1 mit höherer Drehzahl als eine koaxial dazu angeordnete und an den Bläser 4 angebundene Niederdruckwelle rotiert.

Die Hilfswelle 16 verläuft ausgehend von der Triebwerkswelle 11 im Wesentlichen in radialer Richtung des Strahltriebwerks 1 durch einen so genannten inneren Strut 17, d. h. eine mit einem Hohlprofil ausgebildete Strebe, nach außen hin durch den Triebwerkskern 5 zu dem Zwischengehäuse 10. Im Bereich des Zwischengehäuses 10 wirkt die Hilfswelle 16 über eine Kegelradverzahnung 18 mit der Antriebswelle 12 zusammen.

Bei einer alternativen Ausführung kann die Hilfsgerätegetriebeeinrichtung auch im Wesentlichen in einem Bereich eines außerhalb des Nebenstromkanals 2 angeordneten Gehäuses 19 angeordnet sein, wobei die Antriebswelle insbesondere von einer in radialer Richtung sowohl den inneren Strut 17 als auch einen äußeren Strut 20 durchlaufenden Hilfswelle, welche auch mehrteilig ausgebildet sein kann, angetrieben werden kann.

Über Zahnradpaarungen 13, insbesondere Stirnradstufen, wirkt die Antriebswelle 12 mit einer in der Fig. 2 vereinfacht gezeigten und im Wesentlichen stromab des Zwischengehäuses 10 angeordneten Hilfsgerätegetriebeeinrichtung 21 mit vorliegend vier Hilfsgerätegetriebewellen 22 zusammen. Die Hilfsgerätegetriebewellen 22 sind im Wesentlichen achsparallel zu der Triebwerkswelle 11 angeordnet und im Wesentlichen in Umfangsrichtung des Triebwerkes 1 verteilt nebeneinander im Bereich des Zwischengehäuses 10, d. h. in radialer Richtung zwischen dem Nebenstromkanal 2 und dem Triebwerkskern 5, positioniert.

Auf den Hilfsgerätegetriebewellen 22 und der Antriebswelle 12 sind vorliegend vier Hilfs- bzw. Nebenaggregate 23 bis 26 angeordnet, welche beispielsweise eine Spritpumpe, eine Hydraulikpumpe, einen Entlüfter oder einen pneumatischen Starter darstellen können und über ein hier nur schematisch angedeutetes und transparent dargestelltes Getriebe 27 der Hilfsgerätegetriebeeinrichtung 21 von der Antriebswelle 12 antreibbar sind. Ebenfalls ersichtlich ist ein auf der Antriebswelle 12 angeordneter, ebenfalls ein Hilfsaggregat darstellender Generator 28.

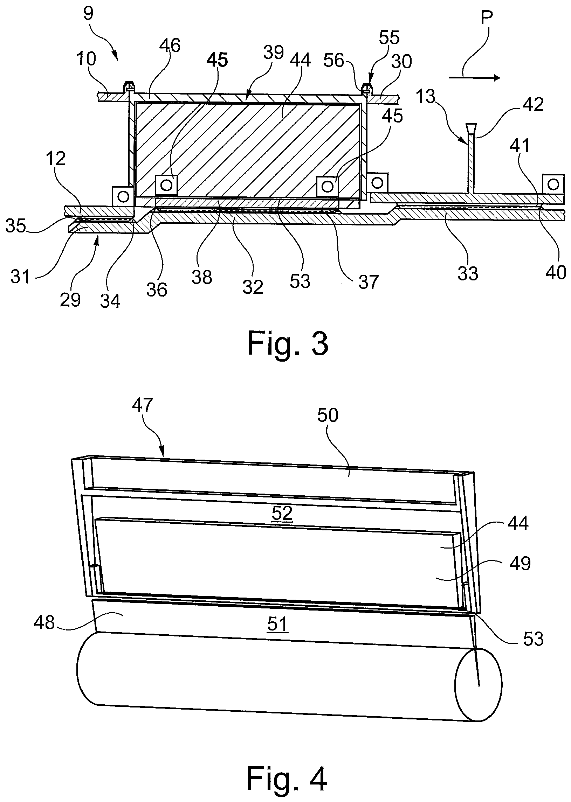

In Fig. 3 ist eine Schnittansicht durch die Hilfsgerätegetriebeeinrichtung 9 der Fig. 1 ersichtlich. Die Antriebswelle 12 ist als Hohlwelle ausgebildet und ist koaxial mit einer Verlängerungswelle 29 in Eingriff bringbar.

Die Verlängerungswelle 29 ist vorliegend dreistufig mit drei jeweils eine unterschiedliche radiale Erstreckung aufweisenden Durchmesserbereichen 31, 32, 33 ausgebildet, wobei der erste Durchmesserbereich 31 den geringsten Außendurchmesser der Durchmesserbereiche 31, 32, 33 aufweist. Der erste Durchmesserbereich 31 weist an seiner Außenseite eine Keilverzahnung 34 auf, mittels welcher die Verlängerungswelle 29 drehfest mit einer an einer Innenseite der der Antriebswelle 12 angeordneten Keilverzahnung 35 in Wirkverbindung bringbar ist.

An den ersten Durchmesserbereich 31 der Verlängerungswelle 29 schließt sich auf einer im Einbauzustand der Verlängerungswelle 29 der Hilfswelle 16 abgewandten Seite der zweite Durchmesserbereich 32 an, welcher einen größeren Außendurchmesser als der erste Durchmesserbereich 31 der Verlängerungswelle 29 aufweist. Der zweite Durchmesserbereich 32 der Verlängerungswelle 29 weist an seiner dem Rotor 38 zugewandten Außenseite eine Keilverzahnung 36 auf, welche zum Zusammenwirken mit einer hiermit korrespondierenden Keilverzahnung 37 eines Rotors 38 des Generators 39 ausgebildet ist. Die Verlängerungswelle 29 bildet für den Generator 39 im Einbauzustand des Generators 39 somit eine durchgängige Welle.

Auf der dem ersten Durchmesserbereich 31 der Verlängerungswelle 29 abgewandten Seite des zweiten Durchmesserbereichs 32 der Verlängerungswelle 29 schließt sich der dritte Durchmesserbereich 33 der Verlängerungswelle 29 an, welcher einen größeren Außendurchmesser als der zweite Durchmesserbereich 32 der Verlängerungswelle 29 aufweist. Auch der dritte Durchmesserbereich 33 der Verlängerungswelle 29 ist an seiner Außenseite mit einer Keilverzahnung 40 versehen, welche zum Zusammenwirken mit einem ebenfalls an seiner der Verlängerungswelle 29 zuweisenden Fläche eine Keilverzahnung 41 aufweisenden Zahnrad 42 der Zahnradpaarung 13 ausgebildet ist. Der dritte Durchmesserbereich 33 der Verlängerungswelle 29 kann bei einer alternativen Ausführung der Erfindung zum Zusammenwirken mit einem weiteren Hilfs- bzw. Nebenaggregat ausgebildet sein.

Zur axialen Sicherung der Verlängerungswelle 29 in dem gezeigten, mit der Antriebswelle 12 zusammenwirkenden Zustand, ist eine nicht näher dargestellte und als Sicherungsring ausgebildete Sicherungseinrichtung vorgesehen, mittels welcher die Verlängerungswelle 29 gegenüber einem Gehäuse 30 der Hilfsgetriebeeinrichtung 9 in axialer Richtung festlegbar ist.

Der Generator 39 weist neben dem Rotor 38 einen Stator 44 auf, welcher vorliegend über zwei Lager 45 gegenüber dem Rotor 38 gelagert ist.

Ein Gehäuse 46 des Generators 39 ist in einer axialen Richtung einerseits an das Zwischengehäuse 10 und andererseits an das Gehäuse 30 der Hilfsgerätegetriebeeinrichtung 9 anbindbar, wobei hierzu jeweils als V-Band-Schellen 55 ausgebildete Befestigungseinrichtungen vorgesehen sind. Die V-Band-Schellen 55 wirken dabei jeweils mit einem Flansch des Gehäuses 46 des Generators 39 und einem Flansch des Zwischengehäuses 10 bzw. einem Flansch des Gehäuses 30 der Hilfsgerätegetriebeeinrichtung 9 zusammen. Um eine Verdrehsicherung des Gehäuses 46 des Generators 39 gegenüber dem Gehäuse 30 der Hilfsgerätegetriebeeinrichtung bzw. dem Zwischengehäuse 10 zu schaffen, ist vorliegend jeweils ein Pin 56 vorgesehen. Der Pin 56 ist jeweils im Wesentlichen in axialer Richtung der Verlängerungswelle 29 von einer Generatorseite in die jeweiligen Flansche eingebracht, so dass dieser zur Demontage des Generators 39 auf einfache Weise gelöst werden kann.

Eine nicht näher ersichtliche Kühleinrichtung des Generators 39 ist vorliegend an ein Triebwerkssystem angeschlossen, so dass der Generator 39 keinen separaten Kühlmitteltank und keine separate Kühlmittelpumpe aufweisen muss.

Weiterhin ist ein in der Fig. 3 nicht näher ersichtliches Ölsystem vorgesehen, welches zur Schmierung von Bauteilen des Generators 39 vorgesehen ist. Das Ölsystem kann als separates Ölsystem des Generators 39 oder als in vergleichbarer Weise zu der Kühleinrichtung an ein Ölsystem des Triebwerks 1 angeschlossen sein.

Durch die beschriebene Ausbildung der Verlängerungswelle 29 kann diese nach einem Lösen des Sicherungsrings in Richtung des Pfeils P in einer translatorischen Relativbewegung gegenüber der Antriebswelle 12 außer Eingriff mit der Antriebswelle 12 bewegt werden. Da der Generator 39 in axialer Richtung gegenüber dem Zwischengehäuse 10 unbeweglich gelagert ist, wird der Generator 39 hierbei von dem Zwischengehäuse 10 in seiner Position gehalten und in Richtung des ersten Durchmesserbereichs 31 der Verlängerungswelle 29 bewegt. Nachdem die Verlängerungswelle 29 über eine bestimmte Wegstrecke in Richtung des Pfeils P bewegt ist und der Generator 39 außer Eingriff mit der Verlängerungswelle 29 gebracht ist, kann der Generator 39 auf einfache Weise in radialer Richtung aus dem Bereich des Zwischengehäuses 10 entfernt werden, um beispielsweise ausgetauscht oder gewartet zu werden. In umgekehrter Reihenfolge kann der Generator 39 wieder auf der Verlängerungswelle 29 angeordnet und diese mit der Antriebswelle 12 in Wirkverbindung gebracht werden.

Um die Verbindungsbereiche der Verlängerungswelle 29 mit der Antriebswelle 12, dem Rotor 38 und dem Zahnrad 42 im Einbauzustand der Verlängerungswelle 29 ausreichend mit Schmiermittel zu versorgen, sind in den Durchmesserbereichen 31, 32, 33 nicht näher ersichtliche Ausnehmungen vorgesehen, durch welche ein Schmiermittel bei einer Rotation der Verlängerungswelle 29 in einem Betriebszustand des Strahltriebwerks 1 durch eine Zentrifugalkraft zu den Keilverzahnungen 34, 35, 36, 37, 40, 41 geführt wird. Eine Schmiermittelzufuhr ist auf Seiten des Zwischengehäuses 10 angeordnet, um die Installation eines Luftturbinenstarters auf einer gegenüberliegenden Hilfsgerätegetriebeeinrichtungsseite anordnen zu können. Eine Kühlung der Verlängerungswelle 29 wird über eine im Bereich eines Getriebegehäuses der Hilfsgerätegetriebeeinrichtung 9 angeordnete Öldüse gewährleistet.

Die Fig. 4 zeigt einen alternativ ausgebildeten Generator 47, welcher mit einem Rotor 48, einem Stator 49 und einem Gehäuse 50 ausgebildet ist, wobei der Rotor 48 wie der Rotor 38 des Generators 28 über eine nicht näher ersichtliche Keilverzahnung drehfest an der Verlängerungswelle 29 festlegbar ist. Im Unterschied zu dem Generator 28 ist der Stator 49 des Generators 47 an dem Gehäuse 50 gelagert.

Zwischen einem den Rotor 48 aufnehmenden Rotorbereich 51 und einem den Stator 49 aufnehmenden Statorbereich 52 ist wie bei dem Generator 28 ein eine Gehäuseeinrichtung darstellendes Trennelement 53 angeordnet, durch welches der Stator 49 zusammen mit dem Gehäuse 50 des Generators 47 gegenüber dem Rotor 48 gekapselt wird. Das Trennelement 53 ist aus einem nichtmagnetischen Material gebildet, so dass die Funktionsfähigkeit des Generators 47 durch das Material des Trennelements 53 nicht beeinträchtigt wird.

In der gezeigten Ausführung ist das Trennelement 53 über nicht näher ersichtliche und beispielsweise als Schrauben, Bolzen oder dergleichen ausgebildete Befestigungselemente mit dem Gehäuse 50 des Generators 47 verbunden. Das Trennelement 53 stellt kein Strukturbauteil dar, so dass eine Dicke des Trennelements 53 in radialer Richtung in Abhängigkeit von dem gewählten Material des Trennelements 53 sehr klein gewählt werden kann. Ein Spalt zwischen dem Rotor 48 und dem Stator 49 ist daher sehr gering, so dass durch das Trennelement 53 nur sehr geringe Verluste verursacht werden.

Der Generator 47 weist eine nicht näher ersichtliche Kühleinrichtung auf, welche den hier einen Nassbereich darstellenden Rotorbereich 51 mit einem Kühlmittel, insbesondere Öl, versorgt. Durch das Kühlmittel wird im Betriebszustand des Strahltriebwerks 1 im Bereich des Stators 49 entstehende Wärmeenergie von diesem abgeführt. Da das Kühlmittel sehr nah an den einen Trockenraum darstellenden Statorbereich 52 heranreicht, ist die Energieaufnahme durch das Kühlmittel sehr effektiv. Zusätzlich wird durch das Kühlmittel eine Korrosion des Rotors 48 vorteilhafterweise verlangsamt bzw. unterbunden.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Niederdruckturbine
- 8.1: Hochdruckturbine
- 9: Hilfsgerätegetriebeeinrichtung
- 10: Zwischengehäuse
- 11: Triebwerkswelle
- 12: Antriebswelle
- 13: Zahnradpaarung
- 14: Hilfsaggregate
- 15: Kegelradverzahnung
- 16: Hilfswelle
- 17: innerer Strut
- 18: Kegelradverzahnung
- 19: Gehäuse
- 20: äußerer Strut
- 21: Hilfsgerätegetriebeeinrichtung
- 22: Hilfsgerätegetriebewelle
- 23 bis 26: Hilfsaggregate
- 27: Getriebe
- 28: Generator
- 29: Verlängerungswelle
- 30: Gehäuse der Hilfsgerätegetriebeeinrichtung
- 31: erster Durchmesserbereich der Verlängerungswelle
- 32: zweiter Druchmesserbereich der Verlängerungswelle
- 33: dritter Durchmesserbereich der Verlängerungswelle
- 34: Keilverzahnung des ersten Durchmesserbereichs
- 35: Keilverzahnung der ersten Welle
- 36: Keilverzahnung des zweiten Durchmesserbereichs
- 37: Keilverzahnung des Rotors
- 38: Rotor
- 39: Generator
- 40: Keilverzahnung des dritten Durchmesserbereichs
- 41: Keilverzahnung des Zahnrads
- 42: Zahnrad
- 44: Stator
- 45: Lager des Generators
- 46: Gehäuse des Generators
- 47: Generator
- 48: Rotor
- 49: Stator
- 50: Gehäuse des Generators
- 51: Rotorbereich
- 52: Statorbereich
- 53: Trennelement
- 55: V-Band-Schelle
- 56: Pin
- P: Pfeil

## Patentansprüche

1. Hilfsgerätegetriebeeinrichtung (9, 21) eines Triebwerks (1) mit einer mit einer Hauptwelle (11) des Triebwerks (1) wirkverbindbaren Antriebswelle (12) und mehreren hiervon angetriebenen Hilfsgerätegetriebewellen (22), welche jeweils mit einem Hilfsaggregat (23 bis 26) koppelbar sind und im Wesentlichen in Umfangsrichtung des Triebwerks (1) verteilt nebeneinander positioniert sind, **dadurch gekennzeichnet, dass** wenigstens ein Hilfsaggregat (28, 39, 47) auf einer Verlängerungswelle (29) der Antriebswelle (12) lösbar anordenbar ist, wobei die Verlängerungswelle (29) koaxial zu der Antriebswelle (12) anordenbar und lösbar mit dieser in Wirkverbindung bringbar ist.

2. Hilfsgerätegetriebeeinrichtung nach Anspruch 1, **dadurch gekennzeichnet, dass** die Verlängerungswelle (29) über eine translatorische Relativbewegung zur Antriebswelle (12) von der Antriebswelle (12) und das wenigstens eine Hilfsaggregat (28, 39, 47) über eine translatorische Relativbewegung zur Verlängerungswelle (29) von der Verlängerungswelle (29) lösbar ist.

3. Hilfsgerätegetriebeeinrichtung nach einem der Ansprüche 1 oder 2, **dadurch gekennzeichnet, dass** eine Wirkverbindung zwischen dem wenigstens einen Hilfsaggregat (28, 39, 47) und der Verlängerungswelle (29) durch eine Bewegung der Verlängerungswelle (29) gegenüber der Antriebswelle (12) in einer Richtung (P) aufhebbar ist.

4. Hilfsgerätegetriebeeinrichtung nach einem der Ansprüche 1 bis 3, **dadurch gekennzeichnet, dass** die Verlängerungswelle (29) einen ersten Bereich (31), einen zweiten Bereich (32) und insbesondere einen dritten Bereich (33) aufweist, wobei der erste Bereich (31) zum Zusammenwirken mit der Antriebswelle (12), der zweite Bereich (32) zum Zusammenwirken mit dem wenigstens einen Hilfsaggregat (28, 39, 47) und der dritte Bereich (33) insbesondere über ein Zahnrad (42) einer Zahnradstufe (43) zum Zusammenwirken mit wenigstens einer weiteren Hilfsgerätegetriebewelle (22) ausgebildet ist.

5. Hilfsgerätegetriebeeinrichtung nach Anspruch 4, **dadurch gekennzeichnet, dass** die Verlängerungswelle (29) stufenförmig mit unterschiedlichen Durchmesserbereichen (31, 32, 33) ausgebildet ist.

6. Hilfsgerätegetriebeeinrichtung nach Anspruch 5, **dadurch gekennzeichnet, dass** der Durchmesser eines ersten Durchmesserbereichs (31) der Verlängerungswelle (29) kleiner als der Durchmesser eines zweiten Durchmesserbereiches (32) der Verlängerungswelle (29) und der Durchmesser des zweiten Durchmesserbereiches (32) der Verlängerungswelle (29) insbesondere einen kleineren Durchmesser als ein dritter Durchmesserbereich (33) aufweist.

7. Hilfsgerätegetriebeeinrichtung nach einem der Ansprüche 4 bis 6, **dadurch gekennzeichnet, dass** die Durchmesserbereiche (31, 32, 33) der Verlängerungswelle (29) insbesondere über eine Keilverzahnung (34, 35, 36, 37, 40, 41) mit der Antriebswelle (12), dem wenigstens einen Hilfsaggregat (28, 39, 47) und insbesondere dem Zahnrad (42) der Zahnradstufe (43) zusammenwirken.

8. Hilfsgerätegetriebeeinrichtung nach einem der Ansprüche 1 bis 7, **dadurch gekennzeichnet, dass** das wenigstens eine Hilfsaggregat vorzugsweise als Generator (28, 39, 47) ausgebildet und im Kraftfluss der Hilfsgerätegetriebeeinrichtung (9, 21) weiteren Hilfsaggregaten (14, 23 bis 26) vorgeschaltet ist.

9. Hilfsgerätegetriebeeinrichtung nach einem der Ansprüche 1 bis 8, **dadurch gekennzeichnet, dass** ein Gehäuse (46, 50) des Hilfsaggregats (28, 39, 47) zur Anbindung an ein im Einbauzustand des Hilfsaggregats (28, 39, 47) in axialer Richtung der Verlängerungswelle (29) angrenzendes Gehäuse, insbesondere ein Gehäuse (30) der Hilfsgerätegetriebeeinrichtung (9, 21) und/oder ein Zwischengehäuse (10), ausgebildet ist.

10. Hilfsgerätegetriebeeinrichtung nach Anspruch 9, **dadurch gekennzeichnet, dass** zur kraftschlüssigen Festlegung des Gehäuses (46, 50) des Hilfsaggregats (28, 39, 47) in axialer Richtung der Verlängerungswelle (29) an das angrenzende Gehäuse (10, 30) eine Befestigungseinrichtung (55), insbesondere eine V-Band-Schelle oder eine Schraubverbindung, vorgesehen ist.

11. Hilfsgerätegetriebeeinrichtung nach einem der Ansprüche 1 bis 8, **dadurch gekennzeichnet, dass** eine Sicherungseinrichtung vorgesehen ist, mittels welcher die Verlängerungswelle (29) entgegen einer Relativbewegung gegenüber der Antriebswelle (12) in axialer Richtung festlegbar ist.

12. Hilfsgerätegetriebeeinrichtung nach einem der Ansprüche 4 bis 9, **dadurch gekennzeichnet, dass** die Verlängerungswelle (29) insbesondere in den Durchmesserbereichen (31, 32, 33) wenigstens eine Ausnehmung aufweist, über welche ein Verbindungsbereich der Verlängerungswelle (29) mit der Antriebswelle (12) und/oder mit dem wenigstens einen Hilfsaggregat (28, 39, 47) und/oder mit dem Zahnrad (42) der Zahnradstufe (43) mit einem Schmiermittel versorgbar ist bzw. sind.

13. Hilfsgerätegetriebeeinrichtung nach einem der Ansprüche 1 bis 10, **dadurch gekennzeichnet, dass** die Verlängerungswelle (29) insgesamt in einem Bereich des Zwischengehäuses (10) des Triebwerks (1) anordenbar ist.

14. Hilfsgerätegetriebeeinrichtung nach einem der Ansprüche 1 bis 11, **dadurch gekennzeichnet, dass** das wenigstens eine Hilfsaggregat (28, 39, 47) zur Stromversorgung einer Triebwerksregelung ausgebildet ist.

15. Hilfsgerätegetriebeeinrichtung nach einem der Ansprüche 1 bis 12, **dadurch gekennzeichnet, dass** das wenigstens eine Hilfsaggregat (28, 39, 47) mit einem separaten Kühlsystem ausgebildet ist.

## Claims

1. Auxiliary unit transmission device (9, 21) of an engine (1) having a drive shaft (12) which can be operatively connected to a main shaft (11) of the engine (1) and having a plurality of auxiliary unit transmission shafts (22) which are driven by the said drive shaft (12), can be coupled in each case to an auxiliary power unit (23 to 26) and are positioned next to one another in a manner which is distributed substantially in the circumferential direction of the engine (1), **characterized in that** at least one auxiliary power unit (28, 39, 47) can be arranged releasably on an extension shaft (29) of the drive shaft (12), wherein the extension shaft (29) can be arranged coaxially with the drive shaft (12) and can be releasably brought into an operative connection with it.

2. Auxiliary unit transmission device according to Claim 1, **characterized in that** the extension shaft (29) can be released from the drive shaft (12) via a translational relative movement with respect to the drive shaft (12), and the at least one auxiliary power unit (28, 39, 47) can be released from the extension shaft (29) via a translational relative movement with respect to the extension shaft (29).

3. Auxiliary unit transmission device according to one of Claims 1 or 2, **characterized in that** an operative connection between the at least one auxiliary power unit (28, 39, 47) and the extension shaft (29) can be cancelled by way of a movement of the extension shaft (29) with respect to the drive shaft (12) in a direction (P).

4. Auxiliary unit transmission device according to one of Claims 1 to 3, **characterized in that** the extension shaft (29) has a first region (31), a second region (32) and, in particular, a third region (33), the first region (31) being configured for interaction with the drive shaft (12), the second region (32) being configured for interaction with the at least one auxiliary power unit (28, 39, 47), and the third region (33) being configured for interaction with at least one further auxiliary unit transmission shaft (22), in particular via a gearwheel (42) of a gearwheel stage (43).

5. Auxiliary unit transmission device according to Claim 4, **characterized in that** the extension shaft (29) is of stepped configuration with different diameter regions (31, 32, 33).

6. Auxiliary unit transmission device according to Claim 5, **characterized in that** the diameter of a first diameter region (31) of the extension shaft (29) is smaller than the diameter of a second diameter region (32) of the extension shaft (29), and the diameter of the second diameter region (32) of the extension shaft (29) has, in particular, a smaller diameter than a third diameter region (33).

7. Auxiliary unit transmission device according to one of Claims 4 to 6, **characterized in that** the diameter regions (31, 32, 33) of the extension shaft (29) interact, in particular via a splined toothing system (34, 35, 36, 37, 40, 41), with the drive shaft (12), the at least one auxiliary power unit (28, 39, 47) and, in particular, the gearwheel (42) of the gearwheel stage (43).

8. Auxiliary unit transmission device according to one of Claims 1 to 7, **characterized in that** the at least one auxiliary power unit is preferably configured as a generator (28, 39, 47) and is connected upstream of further auxiliary power units (14, 23 to 26) in the power flow of the auxiliary unit transmission device (9, 21).

9. Auxiliary unit transmission device according to one of Claims 1 to 8, **characterized in that** a housing (46, 50) of the auxiliary power unit (28, 39, 47) is configured for attaching to an adjoining housing in the axial direction of the extension shaft (29) in the installed state of the auxiliary power unit (28, 39, 47), in particular a housing (30) of the auxiliary unit transmission device (9, 21) and/or an intermediate housing (10).

10. Auxiliary unit transmission device according to Claim 9, **characterized in that** a fastening device (55), in particular a V-band clamp or a screw connection, is provided for fixing the housing (46, 50) of the auxiliary power unit (28, 39, 47) in a non-positive manner in the axial direction of the extension shaft (29) to the adjoining housing (10, 30).

11. Auxiliary unit transmission device according to one of Claims 1 to 8, **characterized in that** a securing device is provided, by means of which the extension shaft (29) can be fixed in the axial direction counter to a relative movement with respect to the drive shaft (12).

12. Auxiliary unit transmission device according to one of Claims 4 to 9, **characterized in that** the extension shaft (29) has at least one recess, in particular in the diameter regions (31, 32, 33), via which recess a connecting region of the extension shaft (29) to the drive shaft (12) and/or to the at least one auxiliary power unit (28, 39, 47) and/or to the gearwheel (42) of the gearwheel stage (43) can be supplied with a lubricant.

13. Auxiliary unit transmission device according to one of Claims 1 to 10, **characterized in that** the extension shaft (29) can be arranged overall in a region of the intermediate housing (10) of the engine (1).

14. Auxiliary unit transmission device according to one of Claims 1 to 11, **characterized in that** the at least one auxiliary power unit (28, 39, 47) is configured for the power supply of an engine control unit.

15. Auxiliary unit transmission device according to one of Claims 1 to 12, **characterized in that** the at least one auxiliary power unit (28, 39, 47) is configured with a separate cooling system.

## Revendications

1. Dispositif de boîtier d'entraînement des accessoires (9, 21) d'un moteur (1), comprenant un arbre d'entraînement (12) pouvant être relié fonctionnellement à un arbre principal (11) du moteur (1) et plusieurs arbres (22) de boîtier d'entraînement des accessoires entraînés par celui-ci, lesquels arbres de boîtier d'entraînement des accessoires peuvent être accouplés respectivement à un groupe auxiliaire de puissance (23 à 26) et sont positionnés les uns à côté des autres de manière répartie sensiblement dans la direction périphérique du moteur (1), **caractérisé en ce qu'**au moins un groupe auxiliaire de puissance (28, 39, 47) peut être disposé de manière détachable sur un arbre de prolongement (29) de l'arbre d'entraînement (12), l'arbre de prolongement (29) pouvant être disposé coaxialement à l'arbre d'entraînement (12) et pouvant être amené en liaison fonctionnelle avec celui-ci de manière détachable.

2. Dispositif de boîtier d'entraînement des accessoires selon la revendication 1, **caractérisé en ce que** l'arbre de prolongement (29) peut être détaché de l'arbre d'entraînement (12) par un mouvement relatif de translation par rapport à l'arbre d'entraînement (12) et l'au moins un groupe auxiliaire de puissance (28, 39, 47) peut être détaché de l'arbre de prolongement (29) par un mouvement relatif de translation par rapport à l'arbre de prolongement (29).

3. Dispositif de boîtier d'entraînement des accessoires selon la revendication 1 ou 2, **caractérisé en ce qu'**une liaison fonctionnelle entre l'au moins un groupe auxiliaire de puissance (28, 39, 47) et l'arbre de prolongement (29) peut être supprimée par un mouvement de l'arbre de prolongement (29) par rapport à l'arbre d'entraînement (12) dans une direction (P).

4. Dispositif de boîtier d'entraînement des accessoires selon l'une des revendications 1 à 3, **caractérisé en ce que** l'arbre de prolongement (29) comprend une première région (31), une deuxième région (32) et en particulier une troisième région (33), la première région (31) étant réalisée pour coopérer avec l'arbre d'entraînement (12), la deuxième région (32) étant réalisée pour coopérer avec l'au moins un groupe auxiliaire de puissance (28, 39, 47) et la troisième région (33) étant réalisée pour coopérer avec au moins un autre arbre (22) de boîtier d'entraînement des accessoires, en particulier par le biais d'une roue dentée (42) d'un étage de roues dentées (43).

5. Dispositif de boîtier d'entraînement des accessoires selon la revendication 4, **caractérisé en ce que** l'arbre de prolongement (29) est réalisé de manière étagée avec des régions de diamètre différentes (31, 32, 33).

6. Dispositif de boîtier d'entraînement des accessoires selon la revendication 5, **caractérisé en ce que** le diamètre d'une première région de diamètre (31) de l'arbre de prolongement (29) est inférieur au diamètre d'une deuxième région de diamètre (32) de l'arbre de prolongement (29), et le diamètre de la deuxième région de diamètre (32) de l'arbre de prolongement (29) est en particulier un diamètre inférieur à une troisième région de diamètre (33).

7. Dispositif de boîtier d'entraînement des accessoires selon l'une des revendications 4 à 6, **caractérisé en ce que** les régions de diamètre (31, 32, 33) de l'arbre de prolongement (29) coopèrent, en particulier par le biais d'une cannelure (34, 35, 36, 37, 40, 41), avec l'arbre d'entraînement (12), l'au moins un groupe auxiliaire de puissance (28, 39, 47) et en particulier la roue dentée (42) de l'étage de roues dentées (43).

8. Dispositif de boîtier d'entraînement des accessoires selon l'une des revendications 1 à 7, **caractérisé en ce que** l'au moins un groupe auxiliaire de puissance est réalisé de préférence sous forme de générateur (28, 39, 47) et est monté en amont d'autres groupes auxiliaires de puissance (14, 23 à 26) dans le flux de force du dispositif de boîtier d'entraînement des accessoires (9, 21).

9. Dispositif de boîtier d'entraînement des accessoires selon l'une des revendications 1 à 8, **caractérisé en ce qu'**un carter (46, 50) du groupe auxiliaire de puissance (28, 39, 47) est réalisé pour la liaison à un carter adjacent dans l'état d'installation du groupe auxiliaire de puissance (28, 39, 47) dans la direction axiale de l'arbre de prolongement (29), en particulier un carter (30) du dispositif de boîtier d'entraînement des accessoires (9, 21) et/ou un carter intermédiaire (10).

10. Dispositif de boîtier d'entraînement des accessoires selon la revendication 9, **caractérisé en ce qu'**un dispositif de fixation (55), en particulier un collier de serrage en V ou une liaison par vissage, est prévu pour la fixation à force du carter (46, 50) du groupe auxiliaire de puissance (28, 39, 47) au boîtier adjacent (10, 30) dans la direction axiale de l'arbre de prolongement (29).

11. Dispositif de boîtier d'entraînement des accessoires selon l'une des revendications 1 à 8, **caractérisé en ce qu'**un dispositif de sécurité est prévu, au moyen duquel l'arbre de prolongement (29) peut être fixé à l'encontre d'un mouvement relatif par rapport à l'arbre d'entraînement (12) dans la direction axiale.

12. Dispositif de boîtier d'entraînement des accessoires selon l'une des revendications 4 à 9, **caractérisé en ce que** l'arbre de prolongement (29) comprend, en particulier dans les régions de diamètre (31, 32, 33), au moins un évidement par le biais duquel une région de liaison de l'arbre de prolongement (29) à l'arbre d'entraînement (12) et/ou à l'au moins un groupe auxiliaire de puissance (28, 39, 47) et/ou à la roue dentée (42) de l'étage de roues dentées (43) est ou peuvent être alimentée(s) en lubrifiant.

13. Dispositif de boîtier d'entraînement des accessoires selon l'une des revendications 1 à 10, **caractérisé en ce que** l'arbre de prolongement (29) peut être disposé dans son ensemble dans une région du carter intermédiaire (10) du moteur (1).

14. Dispositif de boîtier d'entraînement des accessoires selon l'une des revendications 1 à 11, **caractérisé en ce que** l'au moins un groupe auxiliaire de puissance (28, 39, 47) est réalisé pour l'alimentation en courant électrique d'un système de commande de moteur.

15. Dispositif de boîtier d'entraînement des accessoires selon l'une des revendications 1 à 12, **caractérisé en ce que** l'au moins un groupe auxiliaire de puissance (28, 39, 47) est doté d'un système de refroidissement séparé.
